# EUROPEAN PATENT SPECIFICATION

(11) **EP 1 228 912 B1**
(45) Date of publication and mention of the grant of the patent: **20.07.2005**
(21) Application number: 02075416.4
(22) Date of filing: 30.01.2002
(51) Int. Cl.: B60J 7/06

(54) **Control device for opening and closing open top bodies in industrial vehicles**
Steuervorrichtung zum Öffnen und Schliessen eines oben offenen Behälters für Nutzfahrzeuge
Dispositif d'actionnemment pour ouvrir et fermer la partie supérieure des conteneurs pour véhicules industriels

(30) Priority: 31.01.2001 IT PN010008
(43) Date of publication of application: 07.08.2002
(73) Proprietor: Bortolin Regina di Pivetta IVO & C. S.n.C., 33070 Brugnera (IT)
(72) Inventor: Pivetta, Vittorio, Bortonlin Regina di Pivetta Ivo, 33070 Brugnera (IT); Pivetta, Cesare , Bortonlin Regina di Pivetta Ivo, 33070 Brugnera (IT)
(74) Representative: D'Agostini, Giovanni, Dr.

(56) References cited:
- US-A- 4 189 178
- US-A- 5 145 230
- US-A- 5 253 914

## Description

The present invention relates to a control device for both opening and closing the sheets used to cover the open top bodies in the industrial, agricultural and/or similar vehicles. Such control device allows to open as well as to close the sheets or tarpaulins for covering the bodies of the vehicles by means of easy and simple operations, a control device of this kind is described in US 5145 230 A.

As they are well known, above all and not only, in the industrial vehicles field, sheets or tarpaulins are used to cover the so-called open top boxes or bodies of the vehicles in order to cover, protect, hold in place and therefore to prevent the spilling of the transported materials.

In case of the transport of unstable and loose materials, as for example sand, gravel and such construction materials, the aerodynamic turbulence can take them away from their loading place in the body of the vehicle and release them on the following vehichles.

This causes driving troubles and accident risks due to poor visibility, windshield cracking or breaking in the following vehicles as well as to other drawbacks as the defilement or the eventual pollution of the road surface. Different solutions are already known in the field of the sheets used to cover the vehicles bodies.

Such solutions are complicated, expensive and must be each time realized according to the real dimensions of the vehicle body to be covered, thereby involving long working times and difficult operations for their application.

Moreover, such solutions imply complicated systems which are for example composed by drive shafting to transmit rotary motion and power to the centerings supporting the tarpaulin.

Such shafting are equipped with conical pairs, to transmit their rotary motion to other shafts which are placed in the corners of said open top bodies, and they require reduction gears in order to lower the stress to be applied for moving the whole system.

The above described systems are not easy to operate by manual operations because they are very heavy and produce remarkable frictional forces even though they are equipped with reduction gear. Therefore, such systems require auxiliary actuating means as electric motors or other similar means.

In conclusion, the above described solutions are complicated, expensive and hardly applicable and usable.

The present invention overcomes the above stated drawbacks by providing a control device forming as define in claim 1 This control device is hereinafter described, by way of a not limitative example only, and with reference to the accompanying drawings, wherein:
- The Figure 1 is a perspective view of the control device according to the present invention which is mounted on the open top body of a common vehicle some parts of which being drawn with a thin line for clarity reasons.
- The Figure 2 shows a lateral view of the control device according to the present invention which is mounted on the generical open top body of a preferred vehicle wherein the maximum extended position of the covering tarpaulin is shown in heavy dashed lines and the maximum retracted uncovering position of the tarpaulin is indicated by light dot-dashed lines.
- -The Figure 3 is a plan view of only the open top body and its control device sectioned along the line I - I of the Figure 2, wherein the retracted position of the centerings supporting the tarpaulin is indicated in light dashed lines.
- The Figure 4 is a sectional view taken along the line II-II in the Figure 3 illustrating only the position of the main components , the movement group and return sheaves , which are placed in the tubular telescopic element applied to the upper-front portion of the front wall of the open top body.
- The Figure 5 illustrates, as the Figure 4, the same tubular telescopic casing but including the cables used to move the covering of the open top body.
- The Figure 6 is an enlarged sectional view, taken along the line III - III in the Figure 5, of the movement group housed in the tubular telescopic casing.
- The Figure 7 is a further enlarged and detailed view of the grooved rims of the pulleys included in the movement group illustrated in the previous Figure 6.
- The Figure 8 is a partially broken front view of the telescopic centering used to support covering sheets of different width.

In the above mentioned figures, the common items are marked with the same reference numbers.

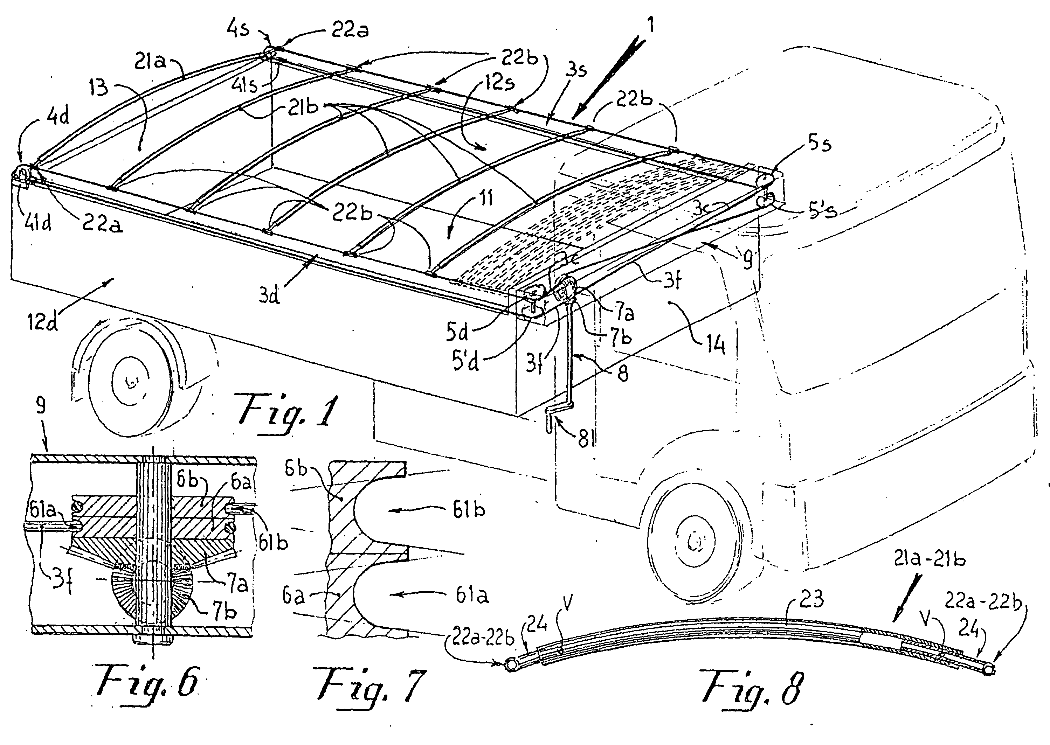

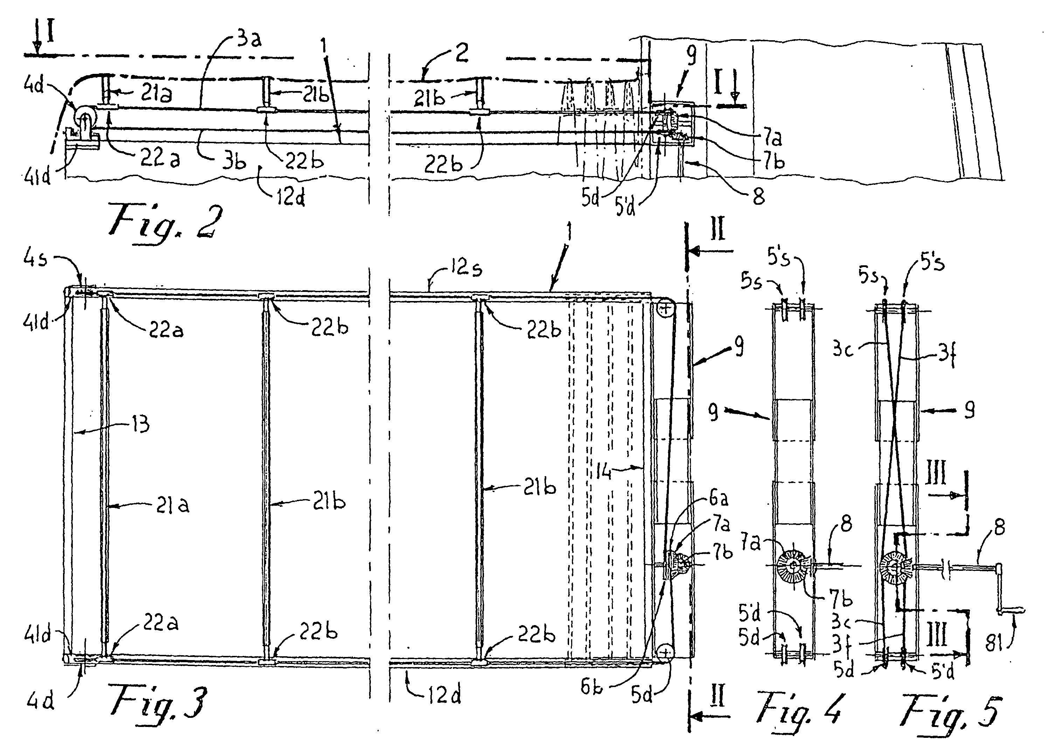

With particular reference to Figures 1, 2, and 3 it is to be noticed the open top body 1 of a generic industrial vehicle (indicated in thin lines) in which is mounted the control device according to the present invention.

The open top body 1 has a bottom 11, the lateral gates 12d and 12s, the rear movable gate 13 and the front fixed wall 14.

The control device forming the object of the present invention is applied to the above mentioned open top body 1 and it is clearly and completely illustrated in the Figure 1, while the other Figures 2, 3, 4, 5, 6 and 7 show, by means of various views and sections, the components forming the said control device.

According to such a control device, the covering tarpaulin 2 is not shown in the Figures 1 and 3 for illustrative clarity and simplicity reasons.

On the contrary, the covering tarpaulin 2 is shown only in the Figure 2 where its maximum extended position, or rather the covering position on the whole open top body 1, is indicated in heavy dashed lines, while its retracted position, where the tarpaulin results contracted next to front fixed wall 14 of the open top body 1 and uncovers the whole open top body 1, is indicated by light dot-dashed lines.

The said tarpaulin 2 is supported by centerings 21a and 21b which are essentially equal one another.

As it can be seen in Figures 1, 2, 3 and with particular reference to Figure 8, said centerings are composed of tubular and telescopically adjustable elements which are hereinafter in detail described.

With reference to said Figure 8, it is to be noticed that such centerings 21a and 21b have, as already said, the same structure and are essentially constituted by a central length 23 which is formed by a suitable piece of metallic tube. The metallic tube is suitably curved in such a way as to constitute a centering 21a-21b which forms a wall bulging upwards for supporting the tarpaulin 2.

In the ends of the tubular piece forming the central length 23 are nested respective tubular pieces 24. Said inner pieces 24 have an outer diameter which is equal to the inner diameter of said central length 23 and are moreover curved in the same manner so that they can freely slide within the central length 23.

The outer ends of said tubular pieces 24 are welded to respective short tubular pieces 22a and 22b which are equal one another and are extending orthogonally to the same tubular pieces 24.

Clearly, the result is that the length of the centerings 21a and 21b can vary in order to be suitable for the various lengths of the open top bodies 1 on which is mounted the control device forming the object of the present invention. The final length can be fixed by means of suitable screws V, rivets or the like.

Even though the said centerings 21a and 21b are equal one another, they are different in their application and therefore in their function.

More precisely, the centering 21a is solidly fixed on the upper length of the cable 3a by means its short tubular pieces 22a, while the other centerings 21b can slide on said upper length of the cable 3a by means their short tubular pieces 22b.

Practically, the short tubular pieces of the rear centering 21 a are fixed on the cable 3a with known means and in known ways , while the short tubular pieces 22b of the movable centerings 21b can freely slide along said upper length of the cable 3a placed inside themselves.

Clearly, the short tubular pieces 22a, 22b and the respective length of the upper cable 3a are symmetrically applied to both sides of the open top body, in particular to the upper portion of the lateral gates 12d and 12s.

With reference to the above-mentioned figures of the drawings, said length of the upper cable 3a is a portion of a cable forming an annular element. More precisely, the present embodiment of the invention provides two different cables forming different annular elements which are differing only for the length and therefore, as hereinafter described, for the arrangement only in the front driving part.

The so resulting two cable rings are marked with the reference numbers 3d and 3s because they are used on two different sides.

Practically, both cable rings 3d and 3s slide within the grooves of the respective rear vertical pulleys 4d and 4s which are applied to the ends of the upper edges of the relative lateral gates 12d and 12s.

At this point, the cable rings 3d and 3s slide within the grooves of the pair of front horizontal pulleys 5d and 5'd , 5s and 5's which are slightly protruding from the lateral ends of a telescopic casing 9 constituted by suitable tubular pieces of square or rectangular cross-section which are slidably nested one within the other.

After which, the cable rings 3d and 3s roll in a relative groove of a pair of vertical driving pulleys 6a and 6b which are housed in the same telescopic casing 9.

It is to be pointed out that such telescopic casing 9, as it can be seen from the Figures 1 and 2, is removably or irremovably fixed, by means of known systems and means, on the front-upper portion of the open top body 1, more precisely on the upper-outer portion of the front wall 14 of the open top body 1.

Such vertical driving pulleys 6a and 6b are solidly connected to a first bevel gear 7a which engages in a second corresponding bevel gear 7b. The bevel gear 7b is connected to a driving shaft 8 equipped with a crank 81 in its opposite free end.

For clarity reasons, the particular group composed of the pair of vertical driving pulleys 6a and 6b and of the respective pair of driving bevel gears 7a-7b, is shown in the enlarged view of Figure 6.

Moreover, the particular shape of the grooves 61a and 61b in said vertical driving pulleys 6a and 6b is shown in a further enlarged view of Figure 7.

It is to be pointed out that in the described embodiment of the invention the preferred ratio of the bevel gear 7a velocity to the corresponding bevel gear 7b velocity is of 3 to 1 because it proved to be the most suitable velocity ratio for the use of such control device.

It is well understood that the movement of the vertical driving pulleys 6a and 6b can be effected by means of a suitable power group, as for example a motor reducer and/or similar means rather than systems which require manual operations.

It is to be pointed out that the right upper lengths 3a , the right lower lengths 3b, the right upper lengths 3c and the right lower lengths 3f constitute the cable ring 3d of the right side and slide, parallel one another, in the grooves of the respective pulleys 4d, 5d, 5'd and 6a.

The corresponding lengths of the left side, namely the left upper lenght 3a and the left lower length 3b are too parallel one another, while solely the respective left lengths 3c and 3f are crossed, for operating resons which will be hereinafter described, and however close their path in the groove of the driving pulley 6b.

As it can clearly seen from the Figure 7, it is to be pointed out that not only the grooves 61a and 61b of the driving pulleys 6a and 6b have a width equal to the diameter of the therein engaged cables in order to avoid any slightest slipping of both cable rings 3d and 3s within the grooves 61a and 61b of the respective driving pulleys 6a and 6b but also such grooves are suitably V shaped and their sides converge inwards and present suitably roughened surface in order to enhance friction and to avoid the above mentioned cable slippings.

After the description of all the components for moving the tarpaulin it is to be pointed out that the group composed of the horizontal driving pulley 5s, 5's, 5d and 5'd as well as the group constituted by the vertical driving pulleys 6a and 6b which are integral with the pair of driving bevel gears 7a-7b are contained in a box-like telescopic casing 9 which can be lengthened and/or shortened according to the requirements involved by the open top body on which said control device must be used.

Both cable rings 3d and 3s are suitably tightened by known means and devices in order to assure the frictional grip, between the cables 3d and 3s and the respective driving pulleys 6a and 6b, and to avoid any slightest slipping of both cable rings 3d and 3s within the grooves 61a and 61b.

In the present embodiment, the tensioning of the cable rings 3d and 3s is obtained, by way of example, by placing the rear vertical pulleys 4d and 4s on respective tightening devices 41d and 41s which urge rearwards thus operating a progressive tightening of the respective cable rings 3d and 3s. After the description of the structural composition of the control device forming the object of the present invention, it is now described its manner of operating.

By means of the crank 81 and the relative driving shaft 8 it is possible to rotate the pair of bevel gears 7a-7b which consequently rotate also the driving pulleys 6a and 6b.

Starting from the position wherein the tarpaulin is folded and placed near the front wall 14, the rotation of said pulleys 6a and 6b in a first direction causes the movement of both cable rings 3d and 3s.

Thus, the upper portion of the cable length 3a of both the rigth and the left side causes the movement of the first centering 21a, which is fixed to the cable length 3a of both the rigth and the left side by means of the respective tubular pieces 22a. Therefore, the centering 21a is moved away from the front wall 14 and toward the rear movable gate 13.

The progressive change in the position of the centering 21a causes the following centerings 21b to be pulled in motion by the progressive unfolding of the tarpaulin.

Such operation goes on till the complete covering of the open top body 1.

It is obvious that by rotating the crank 81, the driving shaft 8 and the driving group costituted by the pair of bevel gears 7a-7b and driving pulleys 6a and 6b in a direction which is opposite to the preceding direction, the centerings 21a and 21b will move on the reverse direction for assuming the retracted position near the front part of the open top body 1 as it is clearly indicated by light dashed lines in the Figures 1 , 2 and 3.

The particularity of the control device forming the object of the present invention comes also from the fact that the cross between the first lengths 3c and 3f, exactly the lengths comprised between the driving pulley 6b and the horizontal pulleys 5s and 5's, allows to set in motion both the upper length 3a and the lower length 3b of the cable ring 3s in the same direction of the corresponding upper length 3a and lower length 3b of the cable ring 3d.

From what described it is clear that the control device forming the object of the present invention is constituted by very simple as well as commercially available components and it is easy to operate, easy to install as well as adjustable to any kinds of open top bodies in the industrial, agricultural and/or similar vehicles.

Moreover, all components are made as parts of a so-called do-it-yourself kit in order to reduce the installation costs. Therefore, such parts of the do-it-yourself kit are made in such a way as to be easily and directly assembled also by not-skilled persons and without the need of special-purpose tools which may be obtained only by special machine shops.

It is well understood that modifications and variations may be made to the control device forming the object of the present invention without departing however from the scope defined by the following claims with reference to the accompanying drawings and thence from the protection extent of the present industrial invention.

## Claims

1. Control device for both opening and closing the sheets or tarpaulins used to cover the open top bodies in industrial, agricultural and/or similar vehicles with respective cable rings (3d and 3s) slidable along the lateral gates (12d and 12s) of an open top body (1) of a vehicle for example a truck or similar, centerings (21a and 21b), for supporting the tarpaulin (2) fixed thereon, are placed on the right and left upper lengths (3a) of such cable rings (3d and 3s), the centering (21a) which faces to the rear part of the open top body (1) being fixed by means of short tubular pieces (22a) of its lateral ends on the corresponding upper lengths (3a) of said cable rings (3d and 3s) on the right and left side respectively, while the following centerings (21b) are slideable on said upper lengths (3a) ; the said cable rings (3d and 3s) are able to be tightened between rear lateral pulleys (4d and 4s), which are montable on the rear ends of the upper edges of the relative lateral gates (12d and 12s), and the vertical driving pulleys (6a and 6b), said cable rings passing through the pairs of pulleys (5d-5'd and 5s-5s') **characterized in that** said vertical driving pulleys are housed in the telescopic casing (9), the pairs of pulleys (5d-5'd and 5s-5's) which are slightly protruding from the lateral ends of said telescopic casing (9) and presenting their respective grooves at the same height and in alignment with the grooves of the pulleys (4d and 4s) ; said driving pulleys (6a-6b) being set in motion by means of a pair of bevel gears (7a-7b) which are manually driven by means of a crank (81) and its driving shaft (8), the lengths of the cable rings (3c and 3f) extending between the said pulleys (5d-5'd and 5s-5's) are partly disposed parallel to one another and partly crossed in such a way as the consequent upper lateral lengths (3a) move in the same directions.

2. Control device according to the preceding claim 1 **characterized in that** said rear vertical pulleys (4d and 4s) are applied to respective tightening devices (41d and 41s) of known type which are suitably driven in order to urge the pulleys (4d and 4s) rearwards and out from the vertical driving pulleys (6a and 6b) thus allowing a suitable tensioning of the relative cables (3d and 3s) as well as avoiding any slightest slipping of the lengths of the cable rings (3d and 3s) engaged within the grooves (61a and 61b) of the respective vertical driving pulleys (6a and 6b).

3. Control device according to the preceding claims **characterized in that** said centerings (21a and 21b) are substantially made in a telescopic manner thus allowing their adjustment to open top bodies (1) of different widths.

4. Control device according to the claim 1 **characterized in that** the said telescopic casing (9) is constituted by tubular pieces of square or rectangular cross-section, which are slidably nested one within the other, and it can be removably or irremovably fixed on the upper-outer portion of the front wall (14) of the open top body (1).

5. Control device according to the preceding claims **characterized in that** the movement of the whole group of pulleys, cables and other movable parts of the control device can be effected not only by manual operations but also by means of service accessories as motor reducer and/or similar means.

## Patentansprüche

1. Steuervorrichtung sowohl für das Öffnen als auch für das Schließen von Abdeckblechen oder -planen, die zum Abdecken oder Öffnen von Aufbauten in industriellen, landwirtschaftlichen und/oder ähnlichen Fahrzeugen benutzt werden, mit den zugehörigen Kabelringen (3d und 3s), die an den Seitentüren (12d und 12s) eines offenen Fahrzeugaufbaus (1), zum Beispiel eines Lastwagens oder ähnlichem, entlang gleitbar sind, wobei Zentrierelemente (21 a und 21b) zum Abstützen der darauf befestigten Abdeckplane (2) an der rechten und linken oberen Länge (3a) solcher Kabetringe (3d und 3s) vorgesehen sind, wobei die Zentrierelemente (21a) zum Hinterteil des offenen Aufbaus (1) hin mittels kurzer rohrförmiger Teile (22a) von dessen seitlichen Enden her auf den entsprechenden oberen Längen (3a) besagter Kabelringe (3d und 3s) auf der rechten bzw. linken Seite befestigt sind, während die folgenden Zentrierelemente (21b) auf den besagten oberen Längen (3a) gleitbar sind, wobei die besagten Kabelringe (3d und 3s) dazu geeignet sind, um zwischen den rückwärtigen seitlichen Riemenscheiben (4d und 4s) gespannt zu werden, die auf den rückwärtigen Enden der oberen Ränder der entsprechenden Seitentüren (12d und 12s) und den senkrechten Antriebsscheiben (6a und 6b) montierbar sind, wobei besagte Kabelringe durch die Riemenscheiben-Paare (5d-5'd und 5s-5's) hindurchführen, **dadurch gekennzeichnet, dass** besagte senkrechte Antriebsscheiben im teleskopischen Gehäuse (9) untergebracht sind, wobei die Riemenscheiben-Paare (5d-5'd und 5s-5's) leicht aus den seitlichen Enden von besagtem teleskopischen Gehäuse (9) vorspringen und ihre entsprechenden Nuten auf derselben Höhe und in Ausrichtung mit den Nuten der Riemenscheiben (4d und 4s) aufweisen; wobei besagte Antriebsscheiben (6a - 6b) über ein Paar von Winkelgetrieben (7a - 7b) in Bewegung gesetzt werden, die manuell mittels einer Kurbel (81) und dessen Antriebswelle (8) angetrieben werden, wobei die Längen der Kabelringe (3c und 3f) zwischen den besagten Riemenscheiben (5d-5d und 5s-5's) verlaufen und teilweise parallel zueinander angeordnet sind und teilweise so durchquert sind wie sich die folgenden oberen seitlichen Längen (3a) in dieselben Richtungen bewegen.

2. Steuervorrichtung nach dem vorangehenden Anspruch 1, **dadurch gekennzeichnet, dass** die besagten rückwärtigen senkrechten Riemenscheiben (4d und 4s) an entsprechende Spannvorrichtungen (41 d und 41 s) bekannter Art angebracht werden, die zweckmäßig angetrieben werden, um die Riemenscheiben (4d und 4s) rückwärts und aus den senkrechten Antriebsscheiben (6a und 6b) zu drängen, womit ein zweckmäßiges Spannen der entsprechenden Kabel (3d und 3s) ermöglicht ist sowie jeglicher geringster Schlupf der Kabelring-Längen (3d und 3s) vermieden wird, die in den Nuten (61a und 61b) der entsprechenden senkrechten Antriebsscheiben (6a und 6b) eingreifen.

3. Steuervorrichtung nach den vorangegangenen Patentansprüchen, **dadurch gekennzeichnet, dass** die besagten Zentrierelemente (21a und 21 b) im wesentlichen in einer teleskopischen Art hergestellt sind, welche deren Anpassung an offene Aufbauten (1) verschiedener Breiten gestattet.

4. Steuervorrichtung nach Anspruch 1, **dadurch gekennzeichnet, dass** das besagte teleskopische Gehäuse (9) aus rohrförmigen Teilen des Quadrats oder rechtwinkligem Querschnitt gebildet ist, wobei das eine innerhalb des anderen gleitend gelagert ist, und es kann ausbaubar oder unlösbar auf dem oberen/unteren Teilstück der Vorderwand (14) des offenen Aufbaus (1) befestigt sein.

5. Steuervorrichtung nach den vorangehenden Ansprüchen, **dadurch gekennzeichnet, dass** die Bewegung der gesamten Gruppe von Riemenscheiben, Kabeln und anderen beweglichen Teilen der Steuervorrichtung nicht nur durch manuelle Betätigungen bewirkt werden kann, sondern auch über Betriebszubehör, wie mit einem Getriebemotor und/oder ähnlichen Mitteln, durchgeführt werden kann.

## Revendications

1. Dispositif de contrôle pour l'ouverture et la fermeture de toiles ou bâches utilisées pour recouvrir la partie supérieure ouverte de bennes de véhicules industriels, agricoles et/ou similaires avec anneaux de câbles respectifs (3d et 3s) pouvant coulisser le long des battants latéraux (12d et 12s) de la partie supérieure ouverte d'une benne (1) d'un véhicule par exemple un camion ou similaire, les cintres (21a et 21b), pour supporter la bâche (2) fixée sur ces battants, sont placés sur les longueurs supérieures gauches et droites (3a) de ces anneaux de câble (3d et 3s), le cintre (21a) situé sur la partie postérieure de la partie supérieure ouverte de la benne (1) étant fixé au moyen de pièces tubulaires courtes (22a) de ses extrémités latérales sur les longueurs supérieures correspondantes (3a) desdits anneaux de câble (3d et 3s) respectivement sur le côté droit et le côté gauche, tandis que les cintres suivants (21b) peuvent être coulissés sur lesdites longueurs supérieures (3a); lesdits anneaux de câble (3d et 3s) peuvent être serrés entre des poulies latérales postérieures (4d et 4s), qui peuvent être montées sur les extrémités postérieures des bords supérieurs des battants latéraux relatifs (12d et 12s), et les poulies verticales de mise en fonction (6a et 6b), lesdits anneaux de câble passant à travers les paires de poulies (5d-5'd et 5s-5's) **caractérisé en ce que** lesdites poulies verticales de mise en fonction sont logées dans le logement télescopique (9), les paires de poulies (5d-5'd et 5s-5's) qui saillent légèrement des extrémités latérales dudit logement télescopique (9) et présentant leurs rainures respectives à la même hauteur et en alignement avec les rainures des poulies (4d et 4s); lesdites poulies de mise en fonction (6a-6b) étant enclenchées par l'intermédiaire d'une paire d'engrenages coniques (7a-7b) qui sont guidés manuellement au moyen d'une manivelle (81) et son arbre de transmission (8), les longueurs des anneaux de câble (3c et 3f) s'étendant entre lesdites poulies (5d-5'd et 5s-5's) sont partiellement disposées de façon parallèle l'une à l'autre et partiellement croisées de telle manière que les longueurs latérales supérieures conséquentes (3a) se déplacent dans les mêmes directions.

2. Dispositif de contrôle selon la revendication précédente 1, **caractérisé en ce que** lesdites poulies verticales postérieures (4d et 4s) sont appliquées à des dispositifs de serrage respectifs (41d et 41s) de type connu qui sont actionnés de façon opportune afin de solliciter les poulies (4d et 4s) vers l'arrière et en-dehors des poulies verticales de mise en fonction (6a et 6b) permettant ainsi une tension appropriée des câbles relatifs (3d et 3s) et évitant tout moindre glissement des longueurs des anneaux de câble (3d et 3s) engagés parmi les rainures (61a et 61b) des poulies verticales de mise en fonction respectives (6a et 6b).

3. Dispositif de contrôle selon les revendications précédentes **caractérisé en ce que** lesdits cintres (21a et 21b) sont faits substantiellement de manière télescopique permettant ainsi leur réglage sur la partie supérieure ouverte de bennes (1) de différentes largeurs.

4. Dispositif de contrôle selon la revendication 1 **caractérisé en ce que** ledit logement télescopique (9) est constitué de pièces tubulaires de coupe carrée ou rectangulaire, qui sont nichées l'une dans l'autre de manière coulissante, et peut être fixé de façon amovible ou non sur la partie supérieure extérieure de la paroi antérieure (14) de la partie supérieure ouverte de la benne (1).

5. Dispositif de contrôle selon les revendications précédentes **caractérisé en ce que** le mouvement de l'entier groupe de poulies, câbles et autres parties mobiles du dispositif de contrôle peut être effectué non seulement par des opérations manuelles mais également au moyen d'accessoires de service comme réducteur de moteur et/ou moyens similaires.
